# FASCICULE DE BREVET EUROPEEN

(11) **EP 1 700 476 B1**
(45) Date de publication et mention de la délivrance du brevet: **20.08.2008**
(21) Numéro de dépôt: 04817621.8
(22) Date de dépôt: 17.12.2004
(51) Int. Cl.: H04N 7/14

(54) **TERMINAL DE COMMUNICATION COMPRENANT UNE CAMERA ORIENTABLE**
KOMMUNIKATIONSENDGERÄT MIT EINER MULTIDIREKTIONALEN KAMERA
COMMUNICATION TERMINAL COMPRISING A MULTI-DIRECTIONAL CAMERA

(30) Priorité: 23.12.2003 FR 0315433
(43) Date de publication de la demande: 13.09.2006
(73) Titulaire: TCL & Alcatel Mobile Phones Limited, Tsimsha Tsui Hong Kong (CN)
(72) Inventeur: DURAND, Gilles, F-95610 Eragny (FR); BEUNE, Olivier, F-92190 Meudon (FR); VERMEGLIO, Laurent, 92800 Puteaux (FR)
(74) Mandataire: Hervouet, Sylvie
(86) Numéro de dépôt international: PCT/FR2004/050726
(87) Numéro de publication internationale: WO 2005/064937

(56) Documents cités:
- FR-A- 2 653 237
- GB-A- 2 368 992

## Description

La présente invention concerne un terminal de communication comprenant une caméra orientable.

Un des domaines d'application, non exclusif, de l'invention est celui des terminaux radio téléphoniques mobiles.

L'invention s'applique notamment, mais non exclusivement, à un terminal fonctionnant dans un réseau selon les standards GSM (Groupe spécial Systèmes Mobiles publics de radio communication), DOS, PCS ou UMTS), ou encore un terminal de type DECT (Digital European Cordless Telecommunications en anglais).

De plus en plus de terminaux de communication sont équipés d'une caméra, généralement située au dos du terminal, et permettant à l'utilisateur du terminal de prendre une photo d'un sujet situé devant lui. L'utilisateur peut cadrer le sujet tout en visualisant l'image du sujet sur l'écran d'affichage du terminal, avant de prendre la photo.

Lorsque l'utilisateur veut se prendre en photo, il doit regarder le dos de son terminal mais ne peut plus visualiser son image sur l'écran d'affichage du terminal avant de prendre la photo, et donc il ne peut pas cadrer correctement son image.

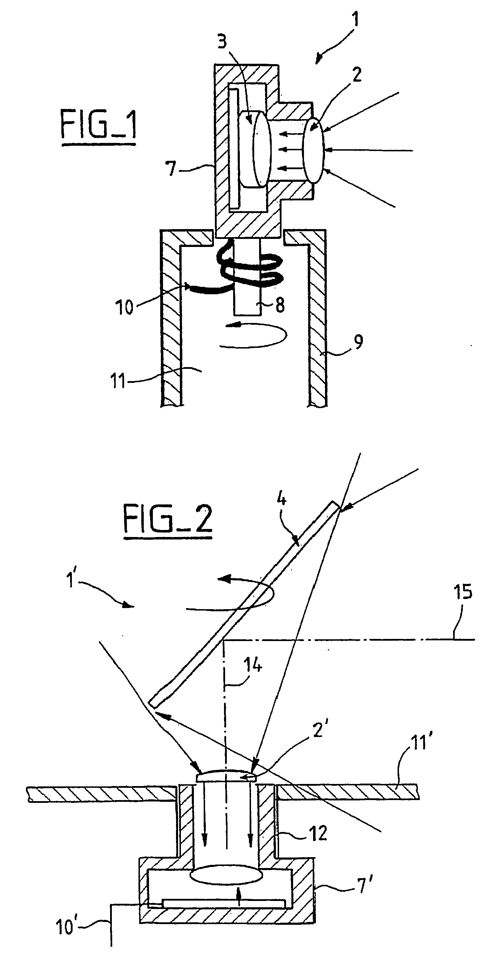

Il est connu de l'art antérieur un système d'acquisition d'images 1, représenté sur la figure 1, comportant un objectif composé d'au moins une lentille 2, d'un capteur 3, d'un boitier 7 et d'un connecteur électronique flexible 10. Le système d'acquisition d'image est situé, par exemple, au sommet du boîtier 11 du terminal.

Le capteur3 est placé dans le boîtier 7. La lentille 2 est placée devant le capteur 3, dans une ouverture ménagée dans la paroi du boîtier 7.

Le boîtier 7 comporte une protubérance cylindrique 8 qui s'enfonce dans le boîtier 11 du terminal la protubérance 8 est approximative ment verticale quand le terminal est dans sa position habituelle d'utilisation. La protubérance 8 est montée de façon à pouvoir tourner sur 180°, tout en solidarisant le système 1 au boitier 11 du terminal.

En faisant tourner le boîtier 7, l'utilisateur dirige la lentille 2 vers l'avant ou vers l'amère du terminal, à volonté.

La lentille 2 est dirigée vers le sujet et forme une image du sujet sur le capteur3 qui enregistre cette image et la transmet sur l'écran d'affichage du terminal via le connecteur électronique flexible 10. Lorsque l'utilisateur du terminal désire se prendre en photo, il lui suffit de tourner le système 1 vers lui.

Cependant le connecteur 10 est très fragile et soumis à des contraintes de manipulation répétée, il se rompt très facilement et le système d'acquisition d'images 1 devient alors inutilisable.

Une solution à ce problème est connue dans le document GB 2 368 992.

Le document décrit un système d'acquisition d'image 1' représenté sur la figure 2. Ce système 1' comporte un objectif composé d'au moins une lentille optique 2', d'un capteur 3' , d'un miroir 4.

Le capteur 3' est placé dans un boîtier 7' qui comporte une ouverture portant la lentille 2'. La lentille 2' estplacée directement en face du capteur 3', et forme une image du sujet sur le capteur 3'.

Le boîtier 7' du système 1'' est fixé à l'intérieur du boîtier du terminal, mais de telle sorte que la lentille 2' affleure à la surface externe de la paroi 6' du terminal.

Le miroir 4 est extérieur au boîtier 7' du système 1'. Il est monté sur un support (non représenté) qui est à l'extérieur du boîtier 11' du terminal et qui peut tourner autour d'un axe de rotation confondu avec l'axe optique 14 de la lentille 2' et du capteur 3'. Il est ainsi déplaçable entre deux positions angulaires prédéterminées, qui diffèrent de 180°. Le miroir 4 est toujours incliné de 45° par rapport à l'axe optique 14 de la lentille 2'.

Si le système l'est situé au sommet du terminal, par exemple, le miroir 4 a un axe de rotation approximativement vertical. Le système 1' a alors un axe optique 15 qui peut être déplacé dans un plan horizontal. Il permet de capter une image à l'avant ou à l'arrière du terminal, selon que le miroir 4 est dans l'une ou l'autre des deux postions prédéterminées.

Les images obtenues respectivement dans ces deux cas sont décalées de 180° autour de l'axe 14. Un circuit électronique permet alors de retourner l'image obtenue dans un sens convenable.

Cependant, cette solution présente l'inconvénient de nécessiter un miroir 4' de grande taille relativement à la taille de la lentille 2'. En effet, l'image est transformée par la lentille après le renvoi d'angle puisque le miroir 4' est situé devant la lentille 2'. Le miroir 4' est donc situé dans le cône de divergence de la lentille 2', et à cause de cela il doit avoir une grande taille pour avoir un champ de vision ayant une taille angulaire raisonnable.

Cette solution présente donc l'inconvénient de nécessiter de prévoir plus de place à la surface du terminal pour une caméra surmontée d'un miroir. De plus, le miroir est une pièce extrêmement fragile. Il doit être surmonté d'un bulle plastique pour le protéger. Cette solution n'est absolument pas compacte.

L'invention a pour but de fournir un système d'acquisition d'image plus compact et résistant.

L'invention, à cet effet, concerne un terminal de communication tel que defini dans la revendication 1.

Le système ainsi caractérisé est plus compact que les systèmes connus parce qu'il nécessite un miroir de taille plus faible, pour un même diamètre de l'objectif.

En effet, l'objectif fait converger les rayons lumineux qui l'ont traversé.

Le faisceau lumineux est donc plus étroit en face de l'objectif. Il est donc possible de le dévier au moyen d'un miroir de taille plus faible, si le miroir est placé en aval de l'objectif.

D'autres caractéristiques et avantages de l'invention apparaîtront à la lecture de la description suivante d'un mode de réalisation particulier de l'invention, donné à titre illustratif et pas limitatif, et des dessins énoncés ci-dessous.
- La figure 1, déjà décrite, illustre un système d'acquisition d'image pour terminal mobile, selon l'art antérieur.
- La figure 2 déjà décrite, illustre un deuxième système d'acquisition d'image pour terminal mobile, selon l'art antérieur.
- La figure 3 Illustre un système d'acquisition d'image pour terminal mobile, selon l'invention.
- Les figures 4 et 5 Illustrent deux terminaux comprenant un système d'acquisition d'image pour terminal mobile, selon l'invention.

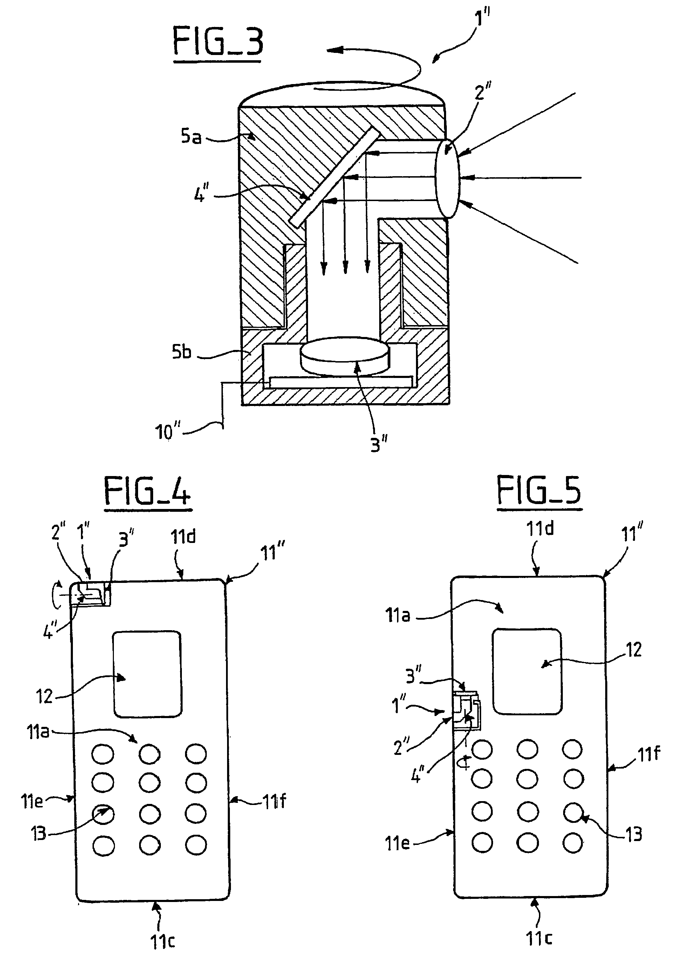

Le terminal mobile de la figure 3 comprend un système d'acquisition d'image 1", comprenant un capteur d'image 3", un objectif constitué d'au moins une lentille optique 2'', et d'un miroir 4".

Le miroir 4" est situé sur le trajet optique entre la lentille 2" et le capteur 3".

Les moyens de capture de l'image 3" sont par exemple un capteur ou tout outre dispositif sensible à la lumière.

Les moyens de réflexion 4" sont par exemple un miroir 4" ou tout autre dispositif sensible à la lumière, tel qu'un prisme ou une surface plastique métallisée.

Le système d'acquisition d'images 1" est compris dans un cylindre scindé en deux parties : une première partie 5a comprenant la lentille 2" et le miroir 4" et une deuxième partie 5b comprenant le capteur 3" connectée sur le terminal.

la deuxième partie 5b du cylindre constituant le système d'acquisition d'images 1'' est fixée à demeure sur le terminal.

La première partie 5a du cylindre constituant le système d'acquisition d'images 1" est rotative par rapport à la deuxième partie 5b du cylindre.

Ainsi, le miroir 4'' et la lentille 2'' sont rota tifs par rapport au capteur 3" fixe.

Et comme le miroir 4" est situé derrière la lentille 2" par rapport au sujet à prendre en photo, le miroir ne se trouve pas dans le cône de divergence de la lentille 2" et n'a pas de contrainte de taille, comme c'est le cas dans l'art antérieur.

Le cylindre permet également de préserver des poussières le système d'acquisition d'images 1".

Sur le figures 4 et 5 sont représentés deux terminaux comprenant le système d'acquisition d'image 1".

Les terminaux de communication illustrés comprennent un boîtier 11" comportant une paroi antérieure 11a, une paroi postérieure 11b, un bord inférieur 11c et un bord supérieur 11d, un premier bord latéral 11e et un deuxième bord latéral 11f.

Les bords respectivement inférieur 11c et supérieur 11d bordent les deux parois respectivement antérieure 11a et postérieure 11b du boîtier 11" du terminal.

Sur la paroi antérieure 11a se trouve un écran d'affichage 12, un clavier 13 et le système d'acquisition d'image 1".

Sur la figure 4 le système d'acquisition d'image 1" est inséré, par exemple, dans un trou ménagé dans la paroi antérieure 11a le long du bord supérieur 11d.

Sur la figure 5 le système d'acquisition d'image 1" est inséré, par exemple, dans un trou ménagé dans la paroi antérieure 11a le long du premier bord latéral 11e.

Le système d'acquisition d'image 1" étant très compact, il est possible de l'insérer le long d'un des bords inférieur 11c, ou supérieur 11d, ou latéral 11e, ou encore deuxième bord latéral 11f, sans craindre de l'endommager puisque le miroir, pièce très fragile, est protégé par la lentille située en bordure du terminal.

Il peut également être prévu de ne pas faire affleurer la lentille en bordure du terminal pour la protéger.

Le système d'acquisition d'image 1" peut également être constitué d'une seule pièce moulée en plastique dans laquelle un capteur 3'' est placé. Cette pièce plastique est moulée de façon à générer une bulle pour jouer le rôle de la lentille 2" ; et dont une partie oblique, située en regard de la bulle jouant le rôle de lentille 2", est métallisée pour jouer le rôle d'un miroir 4".

## Revendications

1. Terminal de communication comprenant un système d'acquisition d'image orientable (1"), ledit système d'acquisition d'image (1") comprenant des moyens de capture d'image (3"), au moins une lentille optique (2"), et des moyens de réflexion (4") fournissant l'image aux moyens de capture de l'image (3''); lesdits moyens de réflexion (4") étant montés en rotation autour de l'axe optique des moyens de capture de l'image (3"), **caractérisé en ce que** lesdits moyens de réflexion (4") sont situés sur le trajet optique entre la lentille optique (2") et les moyens de capture d'image (3"), et **en ce que** lesdits moyens de réflexion (4") et la lentille optique sont liés en rotation autour dudit axe optique.

2. Terminal de communication selon la revendication 1, **caractérisé en ce que** le système d'acquisition d'image (1") est compris dans un cylindre scindé en deux parties : une première partie (5a) comprenant la lentille (2") et lesdits moyens de réflexion (4") et une deuxième partie (5b) comprenant les moyens de capture de l'image (3") connectés sur le terminal.

3. Terminal de communication selon la revendication 2, **caractérisé en ce que** la deuxième partie (5b) du cylindre est fixée à demeure sur ledit terminal.

4. Terminal de communication selon les revendications 2 ou 3, **caractérisé en ce que** la première partie (5a) du cylindre constituant le système d'acquisition d'image (1") est rotative par rapport à la deuxième partie (5b) du cylindre.

5. Terminal de communication selon l'une quelconque des revendications précédentes, **caractérisé en ce que** les moyens de capture de l'image (3") sont un capteur (3") ou tout autre dispositif sensible à la lumière.

6. Terminal de communication selon l'une quelconque des revendications précédentes, **caractérisé en ce que** les moyens de réflexion (4") sont un miroir, ou un prisme, ou tout autre système réfléchissant de forme et de constitution diverse.

## Claims

1. A communication terminal, comprising a steerable image acquisition system (1"), said image acquisition system (1") comprising image capture means (3"), at least one optical lens (2"), and reflecting means (4") supplying the image to the image capture means (3"); said reflecting means (4") being rotatably mounted around the optical axis of the image capture means (3"), **characterized in that** the reflecting means (4") are located on the optical path between the optical lens (2") and the image capture means (3"), and that said reflecting means (4") and the optical lens are rotatably linked around said optical axis.

2. The communication terminal according to claim 1, **characterized in that** the image acquisition system (1") is included inside a cylinder divided into two parts: a first part (5a) comprising the lens (2") and said reflecting means (4"), and a second part (5b) comprising the image capture means (3") connected to the terminal.

3. The communication terminal according to claim 2, **characterized in that** the second part (5b) of the cylinder is permanently fixed on said terminal.

4. The communication terminal according to claims 2 or 3, **characterized in that** the first part (5a) of the cylinder composing the image acquisition system (1") is rotating with respect to the second part (5b) of the cylinder.

5. The communication terminal according to any of the preceding claims, **characterized in that** the image capture means (3'') is a sensor (3'') or any other light sensitive device.

6. The communication terminal according to any of the preceding claims, **characterized in that** the reflecting means (4'') is a mirror, or a prism, or any other reflecting system of various shapes and compositions.

## Patentansprüche

1. Kommunikationsendgerät, umfassend ein schwenkbares Bilderfassungssystem (1''), wobei das Bilderfassungssystem (1'') Bildeinfangmittel (3''), mindestens eine optische Linse (2'') und Reflexionsmittel (4''), die das Bild an die Bildeinfangmittel (3'') liefern, umfasst; wobei die Reflexionsmittel (4'') um die optische Achse der Bildeinfangmittel (3'') drehbar angebracht sind, **dadurch gekennzeichnet, dass** die Reflexionsmittel (4'') sich auf dem Lichtweg zwischen der optischen Linse (2'') und den Bildeinfangmitteln (3'') befinden, und dass die Reflexionsmittel (4'') und die optische Linse um die optische Achse herum drehbar verbunden sind.

2. Kommunikationsendgerät nach Anspruch 1, **dadurch gekennzeichnet, dass** das Bilderfassungssystem (1'') in einem in zwei Teile unterteilten Zylinder enthalten ist: wobei ein erster Teil (5a) die Linse (2'') und die Reflexionsmittel (4'') und ein zweiter Teil (5b) die an das Endgerät angeschlossenen Bildeinfangmittel (3'') umfasst.

3. Kommunikationsendgerät nach Anspruch 2, **dadurch gekennzeichnet, dass** der zweite Teil (5b) des Zylinders dauerhaft am Endgerät befestigt ist.

4. Kommunikationsendgerät nach Anspruch 2 oder 3, **dadurch gekennzeichnet, dass** der erste Teil (5a) des Zylinders, der das Bilderfassungssystem (1'') bildet, im Verhältnis zum zweiten Teil (5b) des Zylinders drehbar ist.

5. Kommunikationsendgerät nach einem der vorhergehenden Ansprüche, **dadurch gekennzeichnet, dass** die Bildeinfangmittel (3'') ein Sensor (3'') oder eine beliebige andere lichtempfindliche Vorrichtung sind.

6. Kommunikationsendgerät nach einem der vorhergehenden Ansprüche, **dadurch gekennzeichnet, dass** die Reflexionsmittel (4'') ein Spiegel, ein Prisma oder ein beliebiges anderes Reflexionssystem in verschiedenen Formen und Zusammensetzungen sind.
